# EUROPÄISCHE PATENTSCHRIFT

(11) **EP 1 466 347 B1**
(45) Veröffentlichungstag und Bekanntmachung des Hinweises auf die Patenterteilung: **03.10.2018**
(21) Anmeldenummer: 02790366.5
(22) Anmeldetag: 13.11.2002
(51) Int. Cl.: H01J 61/28, H01J 61/52, H01J 61/72, C02F 1/32

(54) **AMALGAMDOTIERTER QUECKSILBERNIEDERDRUCK-UV-STRAHLER**
AMALGAM-DOPED MERCURY LOW-PRESSURE UV IRRADIATOR
LAMPE UV A MERCURE A BASSE PRESSION DOPEE PAR AMALGAME

(30) Priorität: 16.01.2002 DE 10201617
(43) Veröffentlichungstag der Anmeldung: 13.10.2004
(73) Patentinhaber: Xylem IP Holdings LLC, White Plains, NY 10604 (US)
(72) Erfinder: FISCHER, Joachim, 31840 Hessisch Oldendorf (DE); RUDKOWSKI, Jan, Boris, 33615 Bielefeld (DE); RIEPE, Dirk, 32051 Herford (DE); SIEF, Rolf, 33602 Bielefeld (DE)
(74) Vertreter: Lenzing Gerber Stute
(86) Internationale Anmeldenummer: PCT/EP2002/012679
(87) Internationale Veröffentlichungsnummer: WO 2003/060950

(56) Entgegenhaltungen:
- EP-A- 0 484 117
- DE-A- 19 734 811
- US-A- 5 237 240
- US-A- 5 274 305
- US-A- 5 581 157
- US-A- 6 124 679
- US-B1- 6 172 452
- PATENT ABSTRACTS OF JAPAN vol. 016, no. 074 (E-1170), 24. Februar 1992 (1992-02-24) & JP 03 266352 A (TOSHIBA LIGHTING & TECHNOL CORP;OTHERS: 01), 27. November 1991 (1991-11-27)
- PATENT ABSTRACTS OF JAPAN vol. 011, no. 070 (E-485), 3. März 1987 (1987-03-03) & JP 61 225753 A (TOSHIBA CORP), 7. Oktober 1986 (1986-10-07)

## Beschreibung

Die vorliegende Erfindung betrifft einen amalgamdotierten Quecksilberniederdruck-UV-Strahler.

Derartige Strahler sind aus der Praxis bekannt. Sie werden im Desinfektionsbereich für Wasser und Abwasser eingesetzt und zeichnen sich durch einen besonders hohen Wirkungsgrad aus. Der hohe Wirkungsgrad wird erreicht, indem bei einem Strahler mit niedrigem internen Druck das Quecksilber in einem Amalgam (vorzugsweise Indium) gebunden wird. Dieses Quecksilber wird in die Gasphase abgegeben, wenn der Strahler eine Betriebstemperatur von etwa 90 °C erreicht. Ausschlaggebend für diese Betriebstemperatur ist die Temperatur des Amalgams. Andere Bauarten von UV-Strahlern sind die nicht mit Amalgam ausgestatteten Niederdruckstrahler, deren optimale Betriebstemperatur etwa bei 40 °C liegt, wobei diese Strahler einen geringeren Wirkungsgrad aufweisen, sowie die Mitteldrucklampen, die einen internen Druck von etwa 1.000 mbar aufweisen und deren Betriebstemperatur mehrere hundert Grad Celsius beträgt. Diese Strahler haben zwar eine relativ hohe Leistung im Kilowattbereich. Der Wirkungsgrad, also das Verhältnis zwischen Strahlungsausgangsleistung im gewünschten Wellenlängenbereich und elektrischer Leistungsaufnahme ist jedoch geringer als der Wirkungsgrad der hier betroffenen amalgamdotierten Quecksilberniederdruckstrahler.

Um im Betrieb die erwähnte optimale Temperatur von etwa 90 °C zu erreichen, werden gattungsgemäße Strahler nicht unmittelbar in die zu desinfizierende Flüssigkeit eingetaucht. Die dort herrschenden Temperaturen im Trinkwasser- oder Abwasserbereich sind zu niedrig, um die erforderliche Temperatur des Strahlers aufrecht zu erhalten. Sie werden deshalb von Hüllrohren umgeben, die zwischen ihrer Innenwandung und der Außenseite des Strahlers einen Luftspalt begrenzen. Die geringe Wärmeleitfähigkeit der Luft gewährleistet im Betrieb des Strahlers, dass sich dieser nicht unter 90 °C abkühlt. Voraussetzung ist allerdings eine ausreichend hohe elektrische Leistung.

Aus diesen Randbedingungen ergibt sich, dass die gattungsgemäßen Strahler beim Betrieb in einem Hüllrohr nur eingeschränkt regelbar sind. So kann beispielsweise bei fabrikneuen Strahlern, die eine besonders hohe anfängliche UV-Ausbeute aufweisen, die elektrische Leistung nicht so weit abgesenkt werden, dass die abgestrahlte UV-Intensität auf das später im gealterten Zustand des Strahlers abgegebene Niveau gesenkt wird. Der UV-Strahler wird dann zu kalt, was die Strahlungsausbeute verringert.

In einem anderen Fall kann der Betriebszustand eintreten, dass das zu behandelnde Wasser eine relativ hohe Temperatur aufweist, beispielsweise 60 °C. Wenn in diesem Betriebszustand relativ alte Strahler verwendet werden, so muss diesen eine hohe elektrische Leistung zugeführt werden, um die erforderliche UV-Intensität zur Verfügung zu stellen. Die hohe Umgebungstemperatur führt dazu, dass der Strahler nicht wie bei niedrigeren Temperaturen auf den optimalen Arbeitsbereich abgekühlt wird. Der Wirkungsgrad des Strahlers sinkt, weil sich die Temperatur des Strahlers auf über 90 °C einstellt. Dieser Betriebszustand ist unerwünscht.

Das Dokument US 5 581 157 A offenbart einen Amalgamdepot aufweisenden Quecksilber-Niederdruck-Amalgamstrahler mit einem Mittel zur Kühlung des Amalgams. Es ist deshalb Aufgabe der vorliegenden Erfindung, einen amalgamdotierten Quecksilberniederdruck-UV-Strahler dahingehend zu verbessern, dass er unabhängig von der Wassertemperatur und vorzugsweise mit variabler UV-Leistung betrieben werden kann.

Diese Aufgabe wird von einer Strahlereinheit mit einem UV-Strahler von der Bauart eines wenigstens ein Amalgamdepot aufweisenden Quecksilber-Niederdruck-Amalgamstrahlers sowie mit einem den Strahler umgebenden Hüllrohr, wobei zwischen dem Hüllrohr und dem Strahler ein Luftspalt vorgesehen ist und wobei in einer Axialrichtung des Strahlers im Bereich des wenigstens einen Amalgamdepots ein Mittel zur Beeinflussung der Temperatur des Amalgams vorgesehen ist, mit den Merkmalen des Anspruchs 1 gelöst.

Weil in Axialrichtung des Strahlers an der axialen Position des Amalgamdepots ein Mittel zur Beeinflussung der Temperatur des Amalgams vorgesehen ist, kann bei niedrigen Amalgamtemperaturen die Temperatur erhöht werden. Das Mittel zur Temperaturbeeinflussung ist auch so ausgestaltet, dass die Temperatur des Amalgams erniedrigt werden kann, falls diese gegenüber dem optimalen Arbeitsbereich zu hoch liegen sollte.

Ein Beispiel, das nicht Teil der Erfindung ist, sieht vor, dass ein Band aus einem metallischen Material zwischen dem Strahler und dem Hüllrohr liegt. Das Band erstreckt sich vorzugsweise in Umfangsrichtung des Strahlers an der axialen Position des Amalgams. Dieses Band kann zumindest abschnittsweise als Bimetall ausgeführt sein, so dass sich die räumliche Anordnung in Abhängigkeit von der Temperatur ändert. Wenn das Band im Bereich des Amalgams am Strahler befestigt ist und ein gegenüber dem Strahler radial beweglicher Bereich vorgesehen ist, der sich innen an das Hüllrohr anlegen kann, kann das Band auch zur Ableitung von Wärme aus dem Bereich des Amalgams benutzt werden, so dass eine Kühlung möglich wird.

Bei der vorliegenden Erfindung ist vorgesehen, dass ein elektrisches Heizelement auf der Außenseite des Strahlers im Bereich des Amalgams angeordnet ist. Dieses Heizelement ist als Ohm'scher Widerstand oder PTC-Widerstand ausgeführt. Der Widerstand liegt an der Außenseite des Strahlers im Bereich des Amalgams und an der Innenseite des Hüllrohrs an, so dass ohne Beaufschlagung des Heizelements mit elektrischem Strom ein Wärmetransport von dem Strahler zum Hüllrohr erfolgen kann und auf diese Weise das Amalgam gekühlt werden kann. Eine besonders einfache Beschaltung des Heizelements ist möglich, wenn dieses Heizelement parallel zu einem Glühwendel des Strahlers geschaltet ist. Die Heizung kann dann mit dem Heizstrom für den Heizwendel eingeschaltet werden. Es kann auch vorgesehen sein, das elektrische Heizelement parallel zu den Anschlüssen der Versorgungsspannung des Strahlers zu schalten, so dass die Heizung in Abhängigkeit von der Betriebsspannung des Strahlers arbeitet.

Nachfolgend werden drei Ausführungsbeispiele anhand. der Zeichnung beschrieben. Es zeigen:
- Figur 1:: Einen nicht zur Erfindung gehörende Strahler mit einem bandförmigen Mittel zur Temperaturbeeinflussung in einer Seitenansicht;
- Figur 2a, 2b:: den Strahler gemäß Figur 1 in einem axialen Querschnitt im Bereich des Amalgams;
- Figur 3:: einen Strahler mit einem elektrischen Heizmittel; sowie
- Figur 4:: einen anderen Strahler mit einem elektrischen Heizmittel.

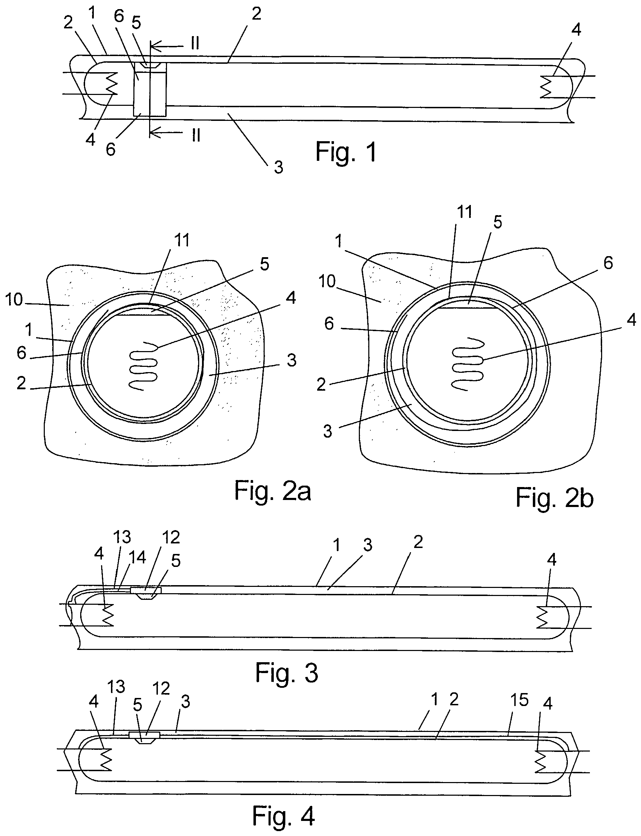

In der Figur 1 ist eine nicht zur Erfindung gehörende Strahlereinheit in einer Seitenansicht dargestellt. Die Stahlereinheit weist ein äußeres Hüllrohr 1 auf, das einen Strahler 2 von der Bauart eines amalgamdotierten Quecksilberniederdruckstrahlers umgibt. Zwischen dem Hüllrohr 1 und dem Strahler 2 befindet sich ein Luftspalt 3. Der Strahler 2 weist in an sich bekannter Weise endseitige Glühwendel 4 auf, die zum Starten und Aufrechterhalten der Gasentladung mit einer Glühspannung bzw. einer Betriebsspannung beaufschlagt werden können. In einem axialen Abstand von dem linken Glühwendel 4 ist ein Amalgamdepot 5 vorgesehen, das in ebenfalls bekannter Weise beispielsweise aus einem Indium-Quecksilber-Amalgam bestehen kann. Dieses Amalgam bewirkt im Betrieb des Strahlers einen besonders hohen Wirkungsgrad.

Eine Metallspirale 6, die die axiale Ausdehnung des Amalgamdepots 5 geringfügig überschreitet, ist im Bereich des Amalgamdepots 5 außen an dem Strahler 2 befestigt und liegt in dem Luftspalt 3 zwischen dem Hüllrohr 1 und dem Strahler 2.

Der genauere Aufbau im Bereich der Linie II-II ist in den Figuren 2a und 2b näher veranschaulicht, die einen Querschnitt durch die Strahlereinheit gemäß Figur 1 entlang dieser Linie zeigen.

Die Figur 2a zeigt die Strahlereinheit mit dem Hüllrohr 1, das hier von der zu desinfizierenden Flüssigkeit 10 umgeben ist, bei niedriger Betriebstemperatur. Die Spirale 6 ist bei 11 wärmeleitend mit der Außenseite des Strahlers 2 verbunden, beispielsweise dort mit einem UVbeständigen Klebstoff aufgeklebt. Ausgehend von der Position 11 verläuft die Spirale 6 bis zu ihrem freien Ende etwa parallel zur Umfangsrichtung des Strahlers 2. Die Spirale 6 ist bei diesem Ausführungsbeispiel als Bimetall ausgebildet und aufgrund der niedrigen Temperaturen in einer räumlichen Gestalt, die etwa dem Umfang des Strahlers 2 entspricht. Sie liegt also bis zum ihrem freien Ende eng am Strahler an.

In der Figur 2b ist die Konfiguration gemäß Figur 2a bei höherer Betriebstemperatur dargestellt. Die Spirale 6 dehnt sich aufgrund des Temperatureinflusses aus, wobei die Befestigung an der Position 11 die Spirale 6 dort festhält. Das freie Ende der Spirale 6 nähert sich dem Hüllrohr 1 an. In dem dazwischen liegenden Bereich hebt sich die Spirale 6 von der Oberfläche des Strahlers 2 ab.

Im Betrieb arbeitet die insoweit beschriebene Strahlereinheit wie folgt:
Zunächst wird der Strahler 2 in bekannter Weise gezündet, so dass sich die Gasentladung im Inneren des Strahlers 2 ausbildet. Durch die Gasentladung heizt sich der Strahler 2 auf. Die im Strahler 2 produzierte Wärme wird über den Luftspalt 3 an das Hüllrohr 1 und dort an die Flüssigkeit 10 abgegeben, so dass sich ab dem Start zunächst die Temperatur im Inneren des Strahlers erhöht, bis sie einen Gleichgewichtszustand erreicht. Bei niedrigen Temperaturen der zu desinfizierenden Flüssigkeit 10, wie sie im Abwasser- und Trinkwasserbereich gelegentlich vorliegen, kann der Zustand eintreten, dass die Gleichgewichtstemperatur im Strahler 2 nicht ausreicht,
um das Amalgam im Amalgamdepot 5 auf die optimale Betriebstemperatur zu bringen, die etwa bei 90 - 95 °C liegt. In diesem Falle reflektiert die wie in Figur 2a eng am Strahler 2 anliegende Spirale 6 die Strahlungsleistung an der axialen Position des Amalgamdepots 5 ins Innere des Strahlers 2, so dass an dieser Stelle die Temperatur im Strahler steigt. Außerdem nimmt die Spirale 6 die vom Strahler ausgehende Wärme auf. Zusätzlich heizt sich die Spirale durch absorbierten Strahlungsfluss aus dem Strahler 2 auf. Die Spirale 6 wird dadurch erwärmt und gibt diese Wärme über die wärmeleitfähige Verbindung an der Position 11 an das Amalgamdepot 5 weiter, so dass dieses sich in der Startphase zunächst schneller aufheizt, so dass der Strahler 2 gegenüber herkömmlichen Anordnungen schneller seine Betriebstemperatur und damit seinen hervorragenden Wirkungsgrad erreicht. Im Betrieb verhindert die Spirale 6 bei niedrigen Temperaturen der Flüssigkeit 10 das Unterschreiten der Betriebstemperatur des Strahlers 2 und
stellt damit ebenfalls dauerhaft einen guten Wirkungsgrad sicher. Zudem kann, falls die Betriebsbedingungen dieses zulassen, die dem Strahler 2 zugeführte elektrische Leistung gesenkt werden. Diese Absenkung der elektrischen Leistung kann beispielsweise gewünscht werden, wenn die Fließgeschwindigkeit der zu desinfizierenden Flüssigkeit 10 gering ist und deshalb eine geringe UV-Intensität zu einer ausreichenden Desinfektion führt. Die verringerte elektrische Leistung führt zu einer Abnahme der Gleichgewichtstemperatur im Inneren des Strahlers 2. Dieser Temperaturabnahme wirkt der oben beschriebene Effekt der Spirale 6 auf das Amalgamdepot 5 entgegen.

Die Figur 2b zeigt den Strahler gemäß Figur 2a in einem Betriebszustand bei höherer Temperatur. Die Spirale 6 hat sich aufgrund ihrer Bimetalleigenschaften ausgedehnt. Sie reicht im Luftspalt 3 näher an das Hüllrohr 1 heran oder kann sich bei weiter steigender Temperatur an das Hüllrohr anlegen. Die Spirale 6 führt dadurch Wärme, die im Bereich der wärmeleitenden Verbindung bei 11 aus dem Amalgamdepot 5 aufgenommen wird, an die kühlere Hüllrohrwandung des Hüllrohres 1 ab. Das Amalgamdepot 5 wird auf diese Weise gekühlt, so dass sich bei hoher elektrischer Leistung oder bei einer hohen Temperatur der Flüssigkeit 10 die Temperatur des Amalgamdepot 5 nicht übermäßig erhöht. Auf diese Weise kann die Spirale 6 einer Erwärmung des Amalgamdepots 5 über den Bereich der optimalen Betriebstemperatur hinaus entgegenwirken. Das Einhalten der Betriebstemperatur, die einen guten Wirkungsgrad sicherstellt, wird hierdurch gewährleistet.

Neben der in den Figuren 1 und 2 dargestellten Ausführung mit einer Bimetallspirale sind auch andere mechanische Lösungen denkbar, so z. B. Vorrichtungen, die bestimmte Eigenschaften von sogenannten Formgedächtnismetallen nutzen. So ist es z. B. auch möglich, zwischen dem Amalgamdepot 5 und dem Hüllrohr 1 eine Blende anzuordnen, die je nach Temperatur in Radialrichtung oder Axialrichtung des Strahlers 2 verschoben wird und so die Temperatur des Amalgamdepots 5 regelt. Es ist auch möglich, einen Strahlungsreflektor auf der dem Amalgamdepot 5 gegenüberliegenden Seite des Strahlers 2 anzuordnen, der allein die dort anfallende Strahlungsleistung auf das Amalgamdepot 5 zurückreflektiert und der gegebenenfalls seine Reflexionseigenschaften temperaturabhängig ändert.

Eine Ausführungsform der vorliegenden Erfindung ist in den Figuren 3 und 4 dargestellt. Bei dieser Ausführung ist nicht eine mechanische Vorrichtung zur Beeinflussung der Temperatur des Amalgamdepots 5 vorgesehen, sondern eine elektrische Heizvorrichtung 12. Die Heizvorrichtung 12 wird wärmeleitend auf der Außenseite des Strahler 2 im Bereich des Amalgamdepots 5 befestigt. Sie besteht aus einem einfachen Heizwiderstand oder einem PTC-Widerstand (positive temperature coefficient). Das Heizelement 12 ist in der Figur 3 über Anschlussleitungen 13 und 14 parallel zu den Glühwendeln 4 geschaltet, so dass bei einem Einschalten der Heizspannung für die Glühwendel 4 auch die Heizspannung auf das Heizelement 12 gegeben wird. Auf diese Weise wird das Amalgam im Amalgamdepot 5 schon beim Startvorgang geheizt. Ein schnelleres Erreichen der Betriebstemperatur ist dadurch möglich. Bei einem Absinken der zugeführten elektrischen Leistung kann die Heizspannung dann wieder eingeschaltet werden, um zu verhindern, dass der Strahler auskühlt. Vorzugsweise liegt das Heizelement 12 mit seiner Außenseite wärmeleitend an dem Hüllrohr 1 an, so dass ohne Beaufschlagung mit Heizspannung das Heizelement 12 aufgrund seiner eigenen Wärmeleitfähigkeit Wärme aus dem Amalgamdepot 5 an das Hüllrohr abführen kann und auf diese Weise zu einer Absenkung der Betriebstemperatur beitragen kann, falls die Temperatur in dem Strahler 2 über den optimalen Bereich ansteigt.

In der Figur 4 ist die Strahlereinheit ebenfalls mit einem Heizwiderstand 12 in oben beschriebener Weise versehen. Die Anschlussleitungen 13 und 15 sind in der Figur 4 jedoch so geführt, dass die Heizspannung des Heizelements 12 aus der Spannung abgegriffen wird, die zwischen den sich gegenüberliegenden Wendeln 4 anliegt. Die Heizspannung 12 wird also aus der Betriebsspannung des Strahlers gewonnen.

Diese Konfiguration kann genutzt werden, wenn der Strahler im Betrieb über den Strom gesteuert wird, also beispielsweise mit konstantem Strom betrieben wird. Je nach Betriebszustand und insbesondere je nach Temperatur im Strahler stellt sich dann die am Strahler anliegende Spannung ein. Dabei ist eine hohe Strahlerspannung ein Indiz für eine zu niedrige Temperatur des Amalgamdepots 5. In der Schaltung gemäß Figur 4 würde bei einem Ansteigen der Strahlerspannung über einen bestimmten Wert die Heizung im Heizelement 12, das hier beispielsweise als VDR ausgeführt ist, ansteigen. Die Temperatur im Amalgamdepot 5 würde aufgrund der zugeführten Heizleistung ebenfalls steigen, so dass die Betriebsspannung wieder sinkt. Es stellt sich mit der Zeit hier ein geregeltes Gleichgewicht ein, das bei geeigneter Auslegung des Heizwiderstandes 12 im Bereich der optimalen Betriebstemperatur liegt. Auch bei dieser Konfiguration kann ohne Beaufschlagung des Heizelements 12 mit der Heizspannung eine überschüssige Wärme aus dem Amalgamdepot 5 an das Hüllrohr 1 abgegeben werden, so dass bei hoher Leistung oder hoher Außentemperatur das Amalgamdepot 5 gekühlt wird.

## Patentansprüche

1. Strahlereinheit mit einem UV-Strahler (2) von der Bauart eines wenigstens ein Amalgamdepot (5) aufweisenden Quecksilber-Niederdruck-Amalgamstrahlers sowie mit einem den Strahler (2) umgebenden Hüllrohr (1), wobei zwischen dem Hüllrohr (1) und dem Strahler (2) ein Luftspalt (3) vorgesehen ist und wobei in einer Axialrichtung des Strahlers (2) im Bereich des wenigstens einen Amalgamdepots (5) ein Mittel zur Beeinflussung der Temperatur des Amalgams vorgesehen ist, **dadurch gekennzeichnet, dass** ein als Ohm'scher Widerstand oder PTC-Widerstand ausgeführtes elektrisches Heizelement (12) auf der Außenseite des Strahlers (2) im Bereich des Amalgams angeordnet ist, welches an der Außenseite des Strahlers (2) im Bereich des Amalgams und an der Innenseite des Hüllrohrs (1) anliegt, so dass ohne Beaufschlagung des Heizelements (12) mit elektrischem Strom ein Wärmetransport von dem Strahler (2) zum Hüllrohr (1) erfolgen kann und auf diese Weise das Amalgam gekühlt werden kann.

2. Strahlereinheit nach Anspruch 1, **dadurch gekennzeichnet, dass** das Heizelement (12) parallel zu einem Glühwendel (4) des Strahlers geschaltet ist.

3. Strahlereinheit nach Anspruch 1, **dadurch gekennzeichnet, dass** das elektrische Heizelement (12) parallel zu den Anschlüssen (13, 14) der Versorgungsspannung des Strahlers (2) geschaltet ist.

## Claims

1. Radiator unit having a UV radiator (2) with the design of a low-pressure mercury amalgam radiator having at least one amalgam deposit (2) and having an envelope tube (1) enclosing the radiator (2), wherein an air gap (3) is provided between the envelope tube (1) and the radiator (2) and wherein a means for influencing the temperature of the amalgam is provided in the region of the at least one amalgam deposit (4) in an axial direction of the radiator (2), **characterised in that** an electrical heating element (12) configured as an ohmic resistor or PTC thermistor is arranged on the outer side of the radiator (2) in the region of the amalgam, and this element bears on the outer side of the radiator (2) in the region of the amalgam and on the inner side of the envelope tube, so that heat transport can take place from the radiator (2) to the envelope tube (1) without applying an electrical current to the heating element (12), and the amalgam can thereby be cooled.

2. Radiator unit according to Claim 1, **characterised in that** the heating element (12) is connected in parallel with an incandescent filament (4) of the radiator.

3. Radiator unit according to Claim 1, **characterised in that** the electrical heating element (12) is connected in parallel with the terminals (13, 14) of the supply voltage of the radiator (2).

## Revendications

1. Unité rayonnante comprenant une lampe à UV (2) sous la forme d'une lampe à amalgame à basse pression de mercure possédant au moins un dépôt d'amalgame (5) ainsi qu'un tube de gainage (1) qui entoure la lampe (2), un intervalle d'air (3) se trouvant entre le tube de gainage (1) et la lampe (2) et un moyen servant à influencer la température de l'amalgame se trouvant dans la direction axiale de la lampe (2) dans la zone de l'au moins un dépôt d'amalgame (5), **caractérisée en ce qu'**un élément chauffant (12) électrique, réalisé sous la forme d'une résistance ohmique ou d'une résistance à CTP, est disposé sur le côté extérieur de la lampe (2) dans la zone de l'amalgame, lequel repose contre le côté extérieur dans la zone de l'amalgame et contre le côté intérieur du tube de gainage (1), de sorte qu'un transport de chaleur de la lampe (2) vers le tube de gainage (1) peut avoir lieu sans alimenter l'élément chauffant (12) avec un courant électrique et l'amalgame peut ainsi être refroidi.

2. Unité rayonnante selon la revendication 1, **caractérisée en ce que** l'élément chauffant (12) est branché en parallèle d'un filament spiralé (4) de la lampe.

3. Unité rayonnante selon la revendication 1, **caractérisée en ce que** l'élément chauffant (12) électrique est branché en parallèle des bornes (13, 14) de la tension d'alimentation de la lampe (2) .
